# EUROPÄISCHE PATENTSCHRIFT

(11) **EP 3 242 815 B1**
(45) Veröffentlichungstag und Bekanntmachung des Hinweises auf die Patenterteilung: **14.08.2024**
(21) Anmeldenummer: 15804506.2
(22) Anmeldetag: 03.12.2015
(51) Int. Cl.: B60Q 1/52, F21S 41/125

(54) **VERFAHREN UND FAHRERASSISTENZSYSTEM ZUM UNTERSTÜTZEN EINES FAHRERS EINES FAHRZEUGS**
METHOD AND DRIVER ASSISTANCE SYSTEM FOR ASSISTING A DRIVER OF A VEHICLE
PROCÉDÉ ET SYSTÈME D'AIDE À LA CONDUITE POUR ASSISTER LE CONDUCTEUR D'UN VÉHICULE

(30) Priorität: 08.01.2015 DE 102015200131
(43) Veröffentlichungstag der Anmeldung: 15.11.2017
(73) Patentinhaber: Volkswagen Aktiengesellschaft, 38440 Wolfsburg (DE)
(72) Erfinder: KRAHNSTÖVER, Anna Zoe, 85049 Ingolstadt (DE)
(86) Internationale Anmeldenummer: PCT/EP2015/078522
(87) Internationale Veröffentlichungsnummer: WO 2016/110365

(56) Entgegenhaltungen:
- EP-A1- 2 295 292
- EP-A1- 2 636 560
- EP-A2- 0 443 185
- EP-A2- 1 862 989
- DE-A1- 102009 009 472
- DE-A1- 102009 009 473
- DE-A1- 102013 001 276
- DE-A1- 102013 217 057
- JP-A- 2008 143 505

## Beschreibung

Die vorliegende Erfindung betrifft ein Verfahren und ein Fahrerassistenzsystem zum Unterstützen eines Fahrers eines Fahrzeugs.

Es ist bekannt Fahrzeuge mit verschiedenen Fahrerassistenzsystemen auszustatten, welche den Fahrer beim Fahren des Fahrzeugs unterstützen. Solche Fahrerassistenzsysteme sollen insbesondere das Umfeld des Fahrzeugs erfassen und interpretieren, um gefährliche Situationen, insbesondere solche, die mit einer Kollisionsgefahr verbunden sind, frühzeitig zu erkennen und den Fahrer bei seinen Fahrmanövern zu unterstützen. Durch Fahrerassistenzsysteme soll der Fahrer dabei unterstützt werden, Kollisionen nach Möglichkeit ganz zu vermeiden oder zumindest die Folgen einer Kollision so gering wie möglich zu halten.

Es sind beispielsweise Kollisionswarnsysteme bekannt, die Objekte im Umfeld des Fahrzeugs detektieren und den Fahrer auf solche Objekte hinweisen, die eine Kollisionsgefahr darstellen. Derartige Systeme können insbesondere den Fahrer bei Nachtfahrten unterstützen, da in diesem Fall die Ausleuchtung der Umgebung des Fahrzeugs durch das Fahrzeugscheinwerfersystem geringer ist als bei Tagfahrten. Für Nachtfahrten ist beispielsweise ein System bekannt, bei dem auf einem Display im Innenraum des Fahrzeugs oder über ein Head-up Display Objekte visualisiert werden, die sich in einer Entfernung vor dem Fahrzeug befinden, welche die Reichweite des Scheinwerfersystems des Fahrzeugs übersteigt.

Des Weiteren ist es bekannt, bei Nachtfahrten die Lichtemission des Scheinwerfersystems zur Fahrerunterstützung zu verwenden. Beispielsweise ist aus der WO 2007/006606 A1 bekannt, bei einem Verfahren zur Fahrerunterstützung mittels einer Kamera eine Szene vor dem Fahrzeug aufzunehmen und anhand des aufgenommenen Bildes eine Analyse der Verkehrssituation durchzuführen. Werden bei diesem Verfahren Verkehrselemente durch die Bildanalyse ermittelt, die auf potentielle Gefahrenräume hinweisen, wird das Scheinwerfersystem des Fahrzeugs so angesteuert, dass der potentielle Gefahrenraum stärker ausgeleuchtet wird.

Des Weiteren ist es aus der DE 199 05 114 A1 bekannt, den Bereich vor dem Fahrzeug mittels einer Videokamera aufzunehmen und die aufgenommenen Bilder daraufhin auszuwerten, ob potentielle Gefahrenstellen, wie beispielsweise Fremdobjekte, vorhanden sind.

Wird eine potentielle Gefahrenstelle erkannt, wird durch die Steuereinrichtung für das Scheinwerfersystem des Fahrzeugs die Charakteristik des Lichtbündels so verändert, dass die Gefahrenstelle verstärkt beleuchtet wird, damit sie vom Fahrer sicher wahrgenommen werden kann. Ergibt sich bei der Auswertung der Bilder, dass ein Ausweichmanöver vom Fahrer gefahren werden sollte, wird durch die Steuereinrichtung die Charakteristik des Lichtbündels derart eingestellt, dass dieses den Nahbereich vor dem Fahrzeug über eine große Breite beleuchtet, so dass der Fahrer eine ausreichende Orientierung für ein Ausweichmanöver hat.

Aus der US 2006/0087416 A1 ist bekannt, ein System zur Verfügung zu stellen, mittels welchem ein Objekt außerhalb eines Fahrzeugs detektiert werden kann. Zudem wird einem Fahrer des Fahrzeugs ein Fahrweg angezeigt. Wird ein Objekt detektiert. Wird der angezeigte Fahrweg derart verändert, dass er auf die Position des detektierten Objekts zuläuft. Zudem kann ein Warnsignal in dem verändert angezeigten Fahrweg angezeigt werden.

Weiterhin ist aus der EP 1 659 029 B1 ein Kraftfahrzeugsnäherungswarnsystem bekannt, bei dem ein Fahrzeug andere Objekte erfasst und einen Bereich auf der Fahrbahn ausleuchtet, so dass die anderen Objekte frühzeitig über die Anwesenheit des Fahrzeugs informiert werden.

Aus der EP 2 636 560 A1 ist ein Scheinwerfersteuergerät zur Steuerung eines Scheinwerfers bekannt, welches Licht vor einem mit der Vorrichtung ausgestatteten Fahrzeug ausstrahlen und eine Farbe des Lichts ändern kann. Dabei wird die Farbe der Scheinwerfer in Abhängigkeit von einem Abstand zwischen dem eigenen Fahrzeug und einem vorausfahrenden Fahrzeug geschaltet. Das Verfahren wird periodisch ausgeführt, während das eigene Fahrzeug mit eingeschalteten Scheinwerfern fährt. Dabei wird, wenn kein Fußgänger erfasst wird, zu der ursprünglichen Farbe der Scheinwerfer zurückgekehrt.

Weiterhin ist aus der EP 2 295 292 A1 ein Verfahren zum Unterstützen eines Fahrers eines Fahrzeugs bekannt. Dabei wird zunächst ermittelt, ob ein detektiertes Objekt eine Kollisionsgefahr für das Fahrzeug darstellt. Wenn ermittelt wird, dass das detektierte Objekt eine Kollisionsgefahr darstellt, wird eine Fahrtrichtung zur Verringerung der Kollisionsgefahr auf die Fahrbahn projiziert. Eine Fahrsituation wird bewertet, indem eingeschätzt wird, ob eine Kollisionsgefahr besteht, ob beschleunigt werden muss, um einen Kollision zu vermeiden, oder ob ein bereits angefangener Überholvorgang abgebrochen werden muss, um eine Kollision zu vermeiden.

Schließlich ist es aus der DE 10 2009 009 473 A1 bekannt, andere Verkehrsteilnehmer zu erfassen und eine Kollisionsgefahr mit diesen anderen Verkehrsteilnehmern zu detektieren. Wird eine Kollisionsgefahr detektiert, wird ein Lichtzeichen vor die erfassten anderen Verkehrsteilnehmer auf die Fahrbahn projiziert. Dadurch werden die anderen Verkehrsteilnehmer auf die Kollisionsgefahr aufmerksam gemacht.

Es ist die Aufgabe der vorliegenden Erfindung, ein Verfahren und ein Fahrerassistenzsystem der eingangs genannten Art bereitzustellen, welche die Wahrscheinlichkeit einer Kollision des Fahrzeugs mit anderen Verkehrsteilnehmern verringern.

Erfindungsgemäß wird diese Aufgabe durch ein Verfahren mit den Merkmalen des Anspruchs 1 sowie ein Fahrerassistenzsystem mit den Merkmalen des Anspruchs 6 gelöst. Vorteilhafte Ausgestaltungen und Weiterbildungen ergeben sich aus den abhängigen Ansprüchen.

Bei dem erfindungsgemäßen Verfahren, bei dem eine Ausgangslichtverteilung in einer weißen Farbe emittiert wird, die von einem Scheinwerfersystem zum Beleuchten des Umfelds vor dem Fahrzeug erzeugt wird, wird eine Wahrscheinlichkeit für eine Kollision mit einem anderen Verkehrsteilnehmer im Umfeld des Fahrzeugs ermittelt, wobei die ermittelte Wahrscheinlichkeit einer Wahrscheinlichkeitsklasse zugeordnet wird. In Abhängigkeit von der Wahrscheinlichkeitsklasse wird von dem Fahrzeug eine Lichtemission emittiert, die eine Lichtverteilung mit einer Charakteristik auf einer Fahrbahn erzeugt, welche die Wahrscheinlichkeitsklasse wiedergibt.

Durch das erfindungsgemäße Verfahren kann vorteilhafterweise durch die Lichtverteilung auf der Straße auf einfache Art und Weise von dem Fahrer des Fahrzeugs, welches die Lichtverteilung erzeugt, und zusätzlich für andere Verkehrsteilnehmer, eine Kollisionsgefahr angezeigt werden. Dies kann insbesondere in bestimmten Verkehrssituationen, beispielsweise bei Abbiegevorgängen an Kreuzungen, bei welchen Verkehrsteilnehmer aus mehreren Richtungen kommen können, vorteilhaft sein. Der Fahrer des Fahrzeugs kann auf einen sich nähernden Verkehrsteilnehmer aufmerksam gemacht werden, bevor dieser von ihm selbst wahrgenommen wird. Zusätzlich wird der Fahrer bei der Einschätzung dabei, ob ein Fahrmanöver noch ausgeführt werden kann, bevor der andere Verkehrsteilnehmer vorbei gefahren ist, unterstützt. Insbesondere an Kreuzungen, an denen die Sicht eines Fahrers beispielsweise durch parkende Fahrzeuge beeinträchtigt ist, wird ein Abbiegevorgang durch das erfindungsgemäße Verfahren sicherer gestaltet.

Im Sinne der Erfindung wird unter Lichtemission des Fahrzeugs eine Lichtemission verstanden, wie sie einen Scheinwerfer des Fahrzeugs an der letzten Barriere zwischen Scheinwerfer und Fahrzeugumfeld, also der Außenscheibe des Scheinwerfers, verlässt. Dabei wird die Charakteristik, welche die Lichtverteilung auf der Fahrbahn erhält, innerhalb des Scheinwerfers erzeugt. Die Lichtemission, welche die Lichtverteilung mit der Charakteristik erzeugt, kann dabei innerhalb des Scheinwerfers durch beliebige Baukomponenten erzeugt werden.

Als Verkehrsteilnehmer im Sinne der Erfindung sind alle anderen am Straßenverkehr teilnehmenden oder sich auf einer Straße oder einem Fußgängerweg befindlichen Verkehrsteilnehmer zu verstehen. Insbesondere sind unter anderen Verkehrsteilnehmern andere Fahrzeuge, Radfahrer und/oder Fußgänger zu verstehen.

Die Charakteristik der Lichtverteilung wird durch eine Wellenlänge der Lichtemission erzeugt, so dass die Charakteristik der Lichtverteilung ihre Farbe ist. Die Wellenlänge der Ausgangslichtverteilung wird so verändert, dass die der Wahrscheinlichkeitsklasse zugehörige Farbe der Ausgangslichtverteilung erzeugt wird. Die Farbe der den Scheinwerfer verlassenden Lichtemission kann dabei vorteilhafterweise sehr einfach manipuliert werden. Zudem kann durch die Wahl der Farbe der Lichtverteilung auf einfache Art und Weise die Reaktion eines Fahrers gesteuert werden. Für hohe Kollisionswahrscheinlichkeiten können dann Farben, die sofort als Warnfarben verstanden werden, verwendet werden, während für geringe Kollisionswahrscheinlichkeiten Farben gewählt werden können, die dem Fahrer eine geringe Wahrscheinlichkeit für eine Kollision anzeigen. Das erfindungsgemäße Verfahren ist insbesondere dazu ausgestaltet, den Fahrer bei einem bestimmten Fahrmanöver zu unterstützen.

Dies entbindet den Fahrer jedoch nicht von der Pflicht, nochmal selbst zu prüfen, ob das Fahrmanöver auch bei einer Lichtverteilung mit einer Charakteristik, die eine geringe Kollisionswahrscheinlichkeit anzeigt, tatsächlich ohne Gefahr ausgeführt werden kann.

Bei dem erfindungsgemäßen Verfahren wird, wenn kein anderer Verkehrsteilnehmer im Umfeld des Fahrzeugs erfasst wird, die Wahrscheinlichkeit für eine Kollision einer ersten Wahrscheinlichkeitsklasse zugeordnet. Wird hingegen ein anderer Verkehrsteilnehmer im Umfeld des Fahrzeugs erfasst, wird die Wahrscheinlichkeit für eine Kollision in Abhängigkeit von einem von dem anderen Verkehrsteilnehmer abhängigen veränderbaren Parameter einer zweiten und/oder dritten Wahrscheinlichkeitsklasse zugeordnet. Dabei ist die Wahrscheinlichkeit für ein Kollision nahezu null, wenn kein anderer Verkehrsteilnehmer erfasst wird. Da jedoch nicht auszuschließen ist, dass sich ein Verkehrsteilnehmer in einem Bereich befindet, der von einem Erfassungsraum einer Erfassungseinheit nicht abgedeckt ist, kann eine Unsicherheit für eine Kollision bleiben. Wird ein anderer Verkehrsteilnehmer erfasst, lässt sich die Wahrscheinlichkeit für eine Kollision in zwei weitere Wahrscheinlichkeitsklassen unterteilen. Diese Unterteilung ist dabei abhängig von einem Parameter, der von dem erfassten Verkehrsteilnehmer abhängig ist und der veränderbar ist. Unter einem solchen Parameter wird insbesondere ein Parameter verstanden, der von dem ersten Fahrzeug nur erfasst werden kann, wenn das zweite Fahrzeug vorhanden ist. Dabei kann der Parameter direkt von einer Vorrichtung des zweiten Fahrzeugs erzeugt werden. Es kann sich jedoch auch um einen Parameter handeln, der eine Beziehung zwischen dem ersten und dem zweiten Fahrzeug betrifft.

Insbesondere umfasst der Parameter einen Abstand des erfassten Verkehrsteilnehmer von dem Fahrzeug, wobei die Wahrscheinlichkeit für eine Kollision der zweiten Wahrscheinlichkeitsklasse zugeordnet wird, wenn der Abstand größer als ein festgelegter Wert ist, und/oder der dritten Wahrscheinlichkeitsklasse zugeordnet wird, wenn der Abstand kleiner oder gleich dem festgelegten Wert ist. Dabei ist die Wahrscheinlichkeit für eine Kollision umso geringer je größer der Abstand von dem erfassten Verkehrsteilnehmer ist. Ab einem gewissen Abstand sollte jedoch ein Fahrmanöver, beispielsweise ein Abbiegevorgang, nicht mehr ausgeführt werden, da die Wahrscheinlichkeit für die Kollision zu groß ist. Der festgelegte Wert des Abstands liegt dabei beispielsweise in einem Bereich von 100 m und 50 m. Dabei kann der festgelegte Wert auch eine Funktion der Geschwindigkeit des anderen Verkehrsteilnehmers sein. Der festgelegte Abstand ist dann umso geringer je niedriger die Geschwindigkeit des anderen Verkehrsteilnehmers ist.

In einer weiteren Ausgestaltung umfasst der Parameter die Bewegungsrichtung des erfassten Verkehrsteilnehmers, wobei ermittelt wird, ob eine prognostizierte Bewegungsrichtung des erfassten Verkehrsteilnehmers die zukünftige Bewegungsrichtung des Fahrzeugs schneidet. Wenn ermittelt wird, dass die prognostizierte Bewegungsrichtung des erfassten Verkehrsteilnehmers die zukünftige Bewegungsrichtung des Fahrzeugs nicht schneidet, wird die Wahrscheinlichkeit der zweiten Wahrscheinlichkeitsklasse zugeordnet. Wenn ermittelt wird, dass die prognostizierte Bewegungsrichtung des erfassten Verkehrsteilnehmers die zukünftige Bewegungsrichtung des Fahrzeugs schneidet, wird die Wahrscheinlichkeit der dritten Wahrscheinlichkeitsklasse zugeordnet. Zur Prognose der Bewegungsrichtung des erfassten Verkehrsteilnehmers kann beispielsweise die Geschwindigkeit bzw. eine Geschwindigkeitsänderung des erfassten Verkehrsteilnehmers berücksichtigt werden. Zudem kann eine Frequenz und/oder Farbe der Lichtemission einer Leuchte des zweiten Fahrzeugs berücksichtigt werden. Zeigt der erfasste Verkehrsteilnehmer durch Blinken einen Abbiegevorgang an, bevor er das Fahrzeug erreicht, ist die Wahrscheinlichkeit einer Kollision gering, da davon ausgegangen wird, dass der andere Verkehrsteilnehmer noch vor dem Fahrzeug abbiegt. Nimmt gleichzeitig zu einem Blinken die Geschwindigkeit des erfassten Verkehrsteilnehmers ab, ist dies ein weiterer Indikator dafür, dass der erfasste Verkehrsteilnehmer tatsächlich abbiegt, bevor er das Fahrzeug erreicht. Die Wahrscheinlichkeit für eine Kollision wird dann als noch geringer ermittelt.

Bei dem erfindungsgemäßen Verfahren weist die Lichtemission eine erste Wellenlänge auf, mit der eine Lichtverteilung auf einer Fahrbahn mit einer ersten Farbe erzeugt wird, wenn die Wahrscheinlichkeit für eine Kollision der ersten Wahrscheinlichkeitsklasse zugeordnet wurde. Die Lichtemission weist eine zweite Wellenlänge auf, mit der eine Lichtverteilung auf einer Fahrbahn mit einer zweiten Farbe erzeugt wird, wenn die Wahrscheinlichkeit für eine Kollision der zweiten Wahrscheinlichkeitsklasse zugeordnet wurde. Zudem weist die Lichtemission eine dritte Wellenlänge auf, mit der eine Lichtverteilung auf einer Fahrbahn mit einer dritten Farbe erzeugt wird, wenn die Wahrscheinlichkeit für eine Kollision der dritten Wahrscheinlichkeitsklasse zugeordnet wurde. Die Wahrscheinlichkeitsklasse kann dem Fahrer des Fahrzeugs dadurch auf einfache Weise angezeigt werden. Insbesondere sind die erste und die zweite Wellenlänge gleich, so dass die erste und die zweite Wahrscheinlichkeitsklasse durch die gleiche Farbe angezeigt werden.

Insbesondere ist die erste Farbe Grün, die zweite Farbe Gelb oder Orange und die dritte Farbe Rot. Dies ist eine besonders intuitive Farbwahl, die dem Fahrer und anderen Verkehrsteilnehmern bereits aus dem Straßenverkehr bekannt ist. Grün wird dabei sofort mit einer geringen Gefahr assoziiert. Orange oder Gelb wird mit einer mittleren Gefahr assoziiert, bei der der Fahrer ein Fahrmanöver zwar noch ausführen könnte, dies aber aus Sicherheitsgründen nicht tun sollte. Zeigt die Lichtverteilung eine rote Farbe, wird dies sofort mit Gefahr assoziiert. Der Fahrer des Fahrzeugs wird daher davon absehen, das geplante Fahrmanöver auszuführen.

Erfindungsgemäß wird ein Lichtzeichen in die Lichtverteilung projiziert, wobei das projizierte Lichtzeichen abhängig von der Farbe der Lichtverteilung, also von der ermittelten Wahrscheinlichkeit, ist. Dadurch kann dem Fahrer des Fahrzeugs vorteilhafterweise noch deutlicher angezeigt werden, ob ein Fahrmanöver ausgeführt werden kann oder nicht.

Insbesondere stellt das Lichtzeichen eine Anleitung zum Ausführen eines Fahrmanövers dar, wenn eine grüne Lichtverteilung auf der Fahrbahn erzeugt wird. Dies kann beispielsweise ein Abbiegepfeil in die Richtung sein, in die der Fahrer des Fahrzeugs abbiegen möchte. Wird hingegen eine orangefarbene oder rote Lichtverteilung auf der Fahrbahn erzeugt, kann das Lichtzeichen eine Warnung vor dem Ausführen des Fahrmanövers darstellen. Beispielsweise kann ein "Kreuz" oder ein Schriftzug, beispielsweise "STOP" oder "WARTEN", auf die Fahrbahn projiziert werden. Dem Fahrer wird dadurch vorteilhafterweise eine Anleitung dazu gegeben, was er als nächstes tun soll.

Ferner betrifft die Erfindung ein Fahrerassistenzsystem zum Unterstützen eines Fahrers eines Fahrzeugs. Das Fahrerassistenzsystem umfasst eine Ermittlungseinheit, mittels welcher eine Wahrscheinlichkeit für eine Kollision mit einem anderen Verkehrsteilnehmer im Umfeld des Fahrzeugs ermittelbar ist, und mittels welcher die ermittelte Wahrscheinlichkeit einer Wahrscheinlichkeitsklasse zuordenbar ist.

Mit der Ermittlungseinheit ist die Wahrscheinlichkeit für eine Kollision einer ersten Wahrscheinlichkeitsklasse zuordenbar, wenn kein anderer Verkehrsteilnehmer im Umfeld des Fahrzeugs erfasst wird, und die Lichtemission eine erste Wellenlänge aufweist, mit der eine Lichtverteilung auf einer Fahrbahn mit einer ersten, von einer weißen Ausgangslichtverteilung veränderten, Farbe erzeugt wird, wenn die Wahrscheinlichkeit für eine Kollision der ersten Wahrscheinlichkeitsklasse zugeordnet wurde.

Weiterhin ist mit der Ermittlungseinheit die Wahrscheinlichkeit für eine Kollision in Abhängigkeit von einem von dem anderen Verkehrsteilnehmer abhängigen veränderbaren Parameter einer zweiten und/oder dritten Wahrscheinlichkeitsklasse zuordenbar, wenn ein anderer Verkehrsteilnehmer im Umfeld des Fahrzeugs erfasst wird, die Lichtemission eine zweite Wellenlänge aufweist, mit der eine Lichtverteilung auf einer Fahrbahn mit einer zweiten Farbe erzeugt wird, wenn die Wahrscheinlichkeit für eine Kollision der zweiten Wahrscheinlichkeitsklasse zugeordnet wurde, und/oder die Lichtemission eine dritte Wellenlänge aufweist, mit der eine Lichtverteilung auf einer Fahrbahn mit einer dritten Farbe erzeugt wird, wenn die Wahrscheinlichkeit für eine Kollision der dritten Wahrscheinlichkeitsklasse zugeordnet wurde.

Zudem umfasst das Fahrerassistenzsystem ein Scheinwerfersystem, welches eine Ausgangslichtverteilung in einer weißen Farbe zum Beleuchten des Umfelds vor dem Fahrzeug erzeugt. Mittels einer Steuervorrichtung ist das Scheinwerfersystem in Abhängigkeit von der Wahrscheinlichkeitsklasse derart ansteuerbar, dass eine Lichtemission emittierbar ist, die eine Lichtverteilung mit einer Charakteristik erzeugt, welche die Wahrscheinlichkeitsklasse wiedergibt. Das Fahrerassistenzsystem ist dazu geeignet, das erfindungsgemäße Verfahren auszuführen. Es weist daher alle Vorteile des erfindungsgemäßen Verfahrens auf.

Das Fahrerassistenzsystem weist eine Erfassungseinheit auf, mittels welcher erfassbar ist, ob sich ein anderer Verkehrsteilnehmer im Umfeld des Fahrzeugs befindet. Mit der Ermittlungseinheit ist die Wahrscheinlichkeit für eine Kollision einer ersten Wahrscheinlichkeitsklasse zuordenbar, wenn kein anderer Verkehrsteilnehmer im Umfeld des Fahrzeugs erfasst wird, und/oder mit der Ermittlungseinheit ist die Wahrscheinlichkeit für eine Kollision in Abhängigkeit von einem von dem anderen Verkehrsteilnehmer abhängigen veränderbaren Parameter einer zweiten und/oder dritten Wahrscheinlichkeitsklasse zuordenbar, wenn ein anderer Verkehrsteilnehmer im Umfeld des Fahrzeugs erfasst wird.

Weiterhin ist mittels des Scheinwerfersystems in Abhängigkeit von der Wahrscheinlichkeitsklasse eine Lichtemission einer Wellenlänge emittierbar, so dass die Charakteristik der erzeugten Lichtverteilung ihre Farbe umfasst. Die Wellenlänge der Ausgangslichtverteilung ist veränderbar, so dass die der Wahrscheinlichkeitsklasse zugehörige Farbe der Ausgangslichtverteilung erzeugbar ist. Die Farbe einer Lichtemission kann dabei auf unterschiedliche Arten manipuliert werden. Beispielsweise kann bereits das von den Lichtquellen emittierte Licht farbig sein. Alternativ kann eine von einer Lichtquelle emittierte Wellenlänge durch Farbfilter verändert werden, so dass das den Scheinwerfer verlassende Licht die gewünschte Wellenlänge aufweist. Erfindungsgemäß ist ein Lichtzeichen in die Lichtverteilung projizierbar, wobei das projizierte Lichtzeichen abhängig von der Farbe der Lichtverteilung ist.

Insbesondere umfasst das Scheinwerfersystem eine Laserprojektionseinheit. Diese kann die Charakteristik und/oder die Farbe der Lichtverteilung erzeugen. Durch eine Laserprojektionseinheit kann vorteilhafterweise eine variable Lichtverteilung erzeugt werden, in welche beliebige Muster und Formen projiziert werden können.

Die Erfindung betrifft ferner ein Fahrzeug mit einem solchen Fahrerassistenzsystem.

Die Erfindung wird nun anhand von Ausführungsbeispielen mit Bezug zu den Zeichnungen im Detail erläutert.
- Fig. 1: zeigt schematisch den Aufbau eines Ausführungsbeispiels des erfindungsgemäßen Fahrerassistenzsystems sowie eine Anordnung des Fahrerassistenzsystems in einem Fahrzeug,
- Fig. 2 bis Fig. 6: zeigen Lichtverteilungen, wie sie von einem Ausführungsbeispielen des erfindungsgemäßen Verfahrens in einer Verkehrssituation erzeugbar sind, und
- Fig. 7 und 8: zeigen Lichtverteilungen, wie sie von einem weiteren Ausführungsbeispiel des erfindungsgemäßen Verfahrens erzeugbar sind.

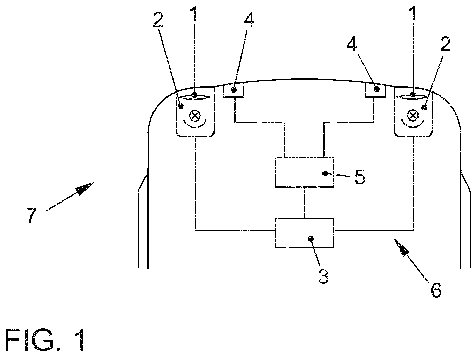

Mit Bezug zu Fig. 1 wird ein Ausführungsbeispiel für ein erfindungsgemäßes Fahrerassistenzsystem 6 gezeigt.

Das Fahrzeug 7, welches das erfindungsgemäße Fahrerassistenzsystem 6 umfasst, weist ein Scheinwerfersystem 2 auf. Das Scheinwerfersystem 2 wird von einer Steuervorrichtung 3 angesteuert. Mit dem Scheinwerfersystem 2 lassen sich dabei vielfältige Abstrahlcharakteristiken erzeugen. Neben den bekannten Lichtfunktionen zum Beleuchten des Umfelds vor dem Fahrzeug 7, wie beispielsweise einer Abblendlichtfunktion und einer Fernlichtfunktion, ist das Scheinwerfersystem 2 so ausgebildet, dass eine Lichtverteilung erzeugt werden kann, die eine bestimmte Charakteristik aufweist. Die Charakteristik der Lichtverteilung ist im vorliegenden Beispiel die Farbe der Lichtverteilung. Mit dem Scheinwerfersystem 2 ist es also möglich, eine Lichtverteilung mit einer bestimmten Farbe zu erzeugen. Zum Erzeugen dieser Farbe wird das Scheinwerfersystem 2 von der Steuervorrichtung 3 derart angesteuert, dass es Licht einer Wellenlänge emittiert, durch welche die Lichtverteilung die bestimmte Farbe erhält.

Das Scheinwerfersystem 2 umfasst dabei vollständig als Laserscheinwerfer ausgestaltete Scheinwerfer, bei denen alle erzeugbaren Lichtfunktionen von Laserstrahlen erzeugt werden. Dies hat den Vorteil, dass die Wellenlänge einer Lichtemission 15 des Scheinwerfersystems 2 unabhängig von mechanisch veränderbaren Bauteilen, wie beispielsweise Farbfiltern ist. Zudem kann die Lichtemission 15 des Scheinwerfersystems 2 dadurch voll variabel angesteuert und beliebige Farben für die Lichtverteilung erzeugt werden.

Zudem umfasst das Fahrerassistenzsystem 6 eine Ermittlungseinheit 5. Mittels der Ermittlungseinheit 5 ist eine Wahrscheinlichkeit für eine Kollision mit einem anderen Verkehrsteilnehmer im Umfeld des Fahrzeugs 7 ermittelbar.

Dazu wird mittels einer Erfassungseinheit 4 erfasst, ob sich im Umfeld des Fahrzeugs andere Verkehrsteilnehmer befinden. Die Erfassungseinheit 4 kann insbesondere Umfeldsensoren, wie z. B. Radarsensoren, LIDAR-Sensoren, Laserscanner, einer Mono- oder Stereokamera, Ultraschallsensoren und/oder PMD 2D oder 3D Sensoren (Photomischdetektoren), umfassen, deren Ausgangssignale an die Ermittlungseinheit 5 übertragen werden. Die Erfassungseinheit 4 kann dabei insbesondere auch für andere Fahrerassistenzsysteme verwendet werden. Es müssen dann keine separaten Umfeldsensoren im Fahrzeug 7 verbaut werden.

Dabei ist zu berücksichtigen, dass die Wahrscheinlichkeit für eine Kollision auf der Annahme beruht, dass sowohl das Fahrzeug 7 wie auch ein erfasster Verkehrsteilnehmer ein Fahrmanöver wie geplant ausführen.

Die ermittelte Wahrscheinlichkeit wird einer Wahrscheinlichkeitsklasse zugeordnet. Die Wahrscheinlichkeitsklassen orientieren sich dabei insbesondere an möglichen Verkehrssituationen. Wird kein anderer Verkehrsteilnehmer im Umfeld des Fahrzeugs 7 erfasst, ist die Wahrscheinlichkeit für eine Kollision gering. Die Wahrscheinlichkeit in einer solchen Situation wird daher einer ersten Wahrscheinlichkeitsklasse zugeordnet. Dabei umfasst die erste Wahrscheinlichkeitsklasse Wahrscheinlichkeiten für eine Kollision in einem Bereich von 0% bis einschließlich 5%. Da die Gefahr besteht, dass sich ein anderer Verkehrsteilnehmer außerhalb eines Erfassungsraums der Erfassungseinheit 4 befindet, besteht immer ein Restrisiko für eine Kollision.

Erfasst die Erfassungseinheit 4 hingegen einen anderen Verkehrsteilnehmer, ist die Wahrscheinlichkeit für eine Kollision abhängig von einem von dem anderen Verkehrsteilnehmer abhängigen veränderbaren Parameter. Dieser Parameter ist ebenfalls von der Erfassungseinheit 4 erfassbar.

Der von dem anderen Verkehrsteilnehmer abhängige veränderbare Parameter kann dabei beispielsweise direkt von einer Vorrichtung des anderen Verkehrsteilnehmers erzeugt werden.

Der Parameter ist dabei der Abstand zwischen dem ersten Fahrzeug 7 und einem anderen Verkehrsteilnehmer. Unterschreitet der Abstand des anderen Verkehrsteilnehmers von dem Fahrzeug 7 einen festgelegten Wert, kann ein von dem Fahrer des Fahrzeugs 7 beabsichtigtes Fahrmanöver nicht mehr ausgeführt werden, ohne dass dies zu einer Kollision mit dem anderen Verkehrsteilnehmer führt.

Alternativ ist dieser Parameter eine Zeit, nach deren Ablauf es zu einer Kollision mit einem anderen Verkehrsteilnehmer kommen würde, wenn das Fahrzeug 7 das beabsichtigte Fahrmanöver wie geplant ausführt. Unterschreitet die Zeit einen festgelegten Wert, beispielsweise einen Wert von 3 Sekunden, kann ein von dem Fahrer des Fahrzeugs 7 beabsichtigtes Fahrmanöver nicht mehr ausgeführt werden, ohne dass dies zu einer Kollision mit dem anderen Verkehrsteilnehmer führt.

Zudem kann der Parameter auch die Bewegungsrichtung des erfassten Verkehrsteilnehmers umfassen. Dabei wird die Bewegungsrichtung des Verkehrsteilnehmers prognostiziert und in die Ermittlung für die Wahrscheinlichkeit für eine Kollision miteinbezogen. Zur Prognose für eine Bewegungsrichtung des anderen Verkehrsteilnehmers kann insbesondere die Farbe und/oder die Frequenz, mit welcher das Fahrzeug des anderen Verkehrsteilnehmers eine Lichtemission emittiert, berücksichtigt werden. Diese verändert sich schließlich insbesondere dann, wenn der erfasste Verkehrsteilnehmer abbiegen möchte und seine Abbiegeabsicht durch Blinken anzeigt. Zusätzlich oder alternativ dazu kann auch die Veränderung einer Geschwindigkeit des anderen Verkehrsteilnehmers erfasst werden. Wird der andere Verkehrsteilnehmer langsamer und blinkt gleichzeitig, wird die Wahrscheinlichkeit für einen beabsichtigten Abbiegevorgang des erfassten Verkehrsteilnehmers höher eingeschätzt, als wenn lediglich die Geschwindigkeit reduziert wird oder lediglich geblinkt wird. Dies läuft insbesondere darauf hinaus, dass ermittelt wird, ob die Bewegungsrichtung des anderen Verkehrsteilnehmers die zukünftige Bewegungsrichtung des Fahrzeugs 7 schneidet.

In Abhängigkeit von dem Parameter wird die Wahrscheinlichkeit ermittelt und einer zweiten oder dritten Wahrscheinlichkeitsklasse zugeordnet. Dabei wird die Wahrscheinlichkeit einer zweiten Wahrscheinlichkeitsklasse zugeordnet, wenn der Abstand einen festgelegten Wert überschreitet, der erfasste Verkehrsteilnehmer also noch weit weg ist, und/oder die prognostizierte Bewegungsrichtung des Verkehrsteilnehmers die Bewegungsrichtung des Fahrzeugs 7 nicht schneidet. Die Wahrscheinlichkeit wird einer dritten Wahrscheinlichkeitsklasse zugeordnet, wenn der Abstand gleich einem festgelegten Wert ist oder diesen unterschreitet, und/oder die prognostizierte Bewegungsrichtung des Verkehrsteilnehmers die Bewegungsrichtung des Fahrzeugs 7 schneidet.

Die zweite Wahrscheinlichkeitsklasse umfasst dabei Wahrscheinlichkeiten für eine Kollision in einem Bereich zwischen 5% bis einschließlich 15%. Die dritte Wahrscheinlichkeitsklasse umfasst Wahrscheinlichkeiten für eine Kollision von 15% bis einschließlich 100%. Dadurch soll gewährleistet werden, dass der Fahrer ein Fahrmanöver nicht ausführt, wenn die Wahrscheinlichkeit für eine Kollision einen gewissen Wert überschreitet. Aus Sicherheitsgründen ist dieser Wert sehr niedrig bei 15% angesetzt.

Die Wellenlänge der Lichtemission 15 wird dann in Abhängigkeit von der Wahrscheinlichkeitsklasse, der die ermittelte Wahrscheinlichkeit zugeordnet wurde, gewählt. Die Steuervorrichtung 3 steuert das Scheinwerfersystem 2 derart an, dass eine Lichtemission 15 mit einer Wellenlänge in einem Bereich von 790 nm bis 630 nm erzeugt wird. Dadurch weist die Lichtverteilung eine rote Farbe auf, wenn die Wahrscheinlichkeit für eine Kollision der dritten Wahrscheinlichkeitsklasse zugeordnet wird. Wird die Wahrscheinlichkeit der ersten oder der zweiten Wahrscheinlichkeitsklasse zugeordnet, wird eine Lichtemission 15 mit einer Wellenlänge in einem Bereich zwischen 560 nm bis einschließlich 480 nm erzeugt. Die Lichtverteilung weist dann eine grüne Farbe auf. Für die zweite Wahrscheinlichkeitsklasse kann alternativ eine Lichtemission 15 mit einer Wellenlänge in einem Bereich von 630 nm bis einschließlich 560 nm aufweisen. Die Lichtverteilung weist dann eine orange oder gelbe Farbe auf.

Wird bereits eine Ausgangslichtverteilung, beispielsweise eine Stadtlichtverteilung oder eine Abblendlichtverteilung in einer gesetzlich erlaubten weißen Farbe emittiert, so wird die Wellenlänge der Lichtemission 15 verändert, so dass die der Wahrscheinlichkeitsklasse zugehörige Farbe der Lichtverteilung erzeugt wird. Die Form der Lichtverteilung kann dabei unbeeinträchtigt bleiben.

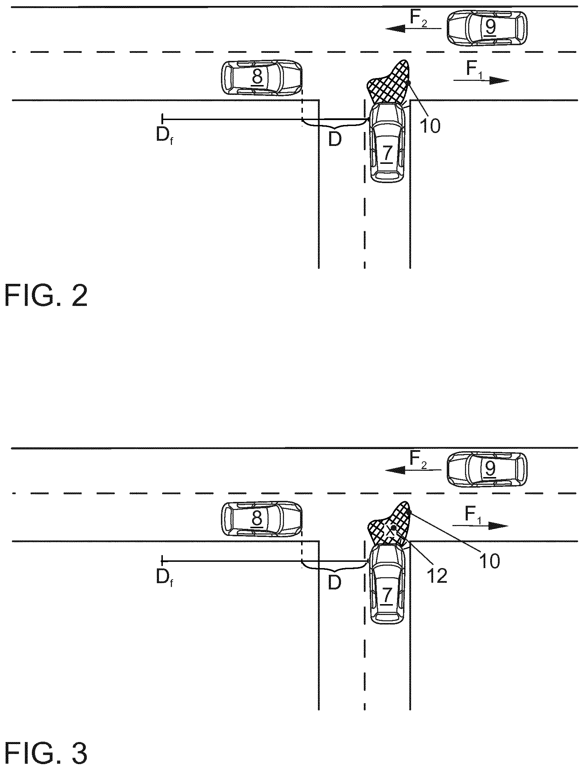

Mit Bezug zu den Figuren 2 bis 6 wird nun anhand einer bestimmten Verkehrssituation ein Ausführungsbeispiel für das erfindungsgemäße Verfahren und die dabei erzeugten Lichtverteilungen 10 und 11 erläutert.

In Fig. 2 ist eine Situation mit drei Verkehrsteilnehmern 7 bis 9 gezeigt, wobei das Fahrzeug 7 das erfindungsgemäße Fahrerassistenzsystem 6 aufweist. Die Verkehrsteilnehmer 8 und 9 fahren dabei auf einer Vorfahrtsstraße in entgegengesetzten Fahrtrichtungen F₁ und F₂. Vor dem Fahrzeug 8 befindet sich rechts eine Abzweigung, bei welcher das Fahrzeug 7 nach rechts auf die Vorfahrtsstraße abbiegen will. Da sich das Fahrzeug 8 auf der Vorfahrtstraße befindet, hat es Vorfahrt und das Fahrzeug 7 muss warten, bis das Fahrzeug 8 vorbei gefahren ist.

Um den Fahrer des Fahrzeug 7 bei der Entscheidung zu unterstützen, ob er den Abbiegevorgang fortsetzt oder noch wartet, bis das Fahrzeug 8 vorbei gefahren ist, wird zunächst erfasst, dass sich die anderen Verkehrsteilnehmer 8 und 9 überhaupt auf der Vorfahrtstraße befinden. Es wird dann ermittelt, welches Fahrmanöver der Fahrer des Fahrzeugs 7 ausführen möchte. Da der rechte Blinker des Fahrzeugs 7 blinkt, wird ermittelt, dass der Fahrer des Fahrzeugs 7 nach rechts abbiegen möchte. Dies bedeutet, es wird die zukünftige Bewegungsrichtung F₁, also die Bewegungsrichtung F₁ nach dem Ausführen des Fahrmanövers, ermittelt. Die Bewegungsrichtung F₂ des Fahrzeugs 9 und die zukünftige Bewegungsrichtung F₁ des Fahrzeugs 7 überschneiden sich dabei zu keiner Zeit, die Wahrscheinlichkeit für eine Kollision mit dem Fahrzeug 9 wird daher in die zweite Wahrscheinlichkeitsklasse eingestuft.

Die Bewegungsrichtung F₁ des Fahrzeugs 8 und die zukünftige Bewegungsrichtung F₁ des Fahrzeugs 7 hingegen überschneiden sich. Es wird der Abstand D des Fahrzeugs 8 von dem Fahrzeug 7 ermittelt. Im Beispiel der Figur 2 unterschreitet der ermittelte Abstand D einen festgelegten Wert D_{f}, der im vorliegenden Beispiel 50 m beträgt. Die Wahrscheinlichkeit für eine Kollision, wenn der Fahrer des Fahrzeugs 7 den Abbiegevorgang fortsetzt, wird daher der dritten Wahrscheinlichkeitsstufe zugeordnet.

Das Scheinwerfersystem 2 des Fahrzeugs 7 wird dann derart angesteuert, dass die Farbe der auf der Fahrbahn erzeugten Lichtverteilung 10 rot ist. Dabei wird die Farbe Rot von dem Fahrer des Fahrzeugs 7 als Warnung aufgenommen. Dem Fahrer des Fahrzeugs 7 wird dadurch deutlich gemacht, dass er das Fahrmanöver nicht ausführen soll. Vielmehr soll er warten, bis das Fahrzeug 8 vorbei gefahren ist. Zusätzlich wird auch der Fahrer des Fahrzeugs 8 die rote Lichtverteilung 10 auf der Fahrbahn wahrnehmen. Er rechnet also damit, dass der Fahrer des Fahrzeugs 7 tatsächlich stehen bleibt.

Werden, wie im vorliegenden Beispiel, mehr als ein anderer Verkehrsteilnehmer erfasst, wird die Charakteristik der Lichtverteilung immer derart erzeugt, dass sie die höchste ermittelte Wahrscheinlichkeitsklasse wiedergibt. Es wird daher eine rote Lichtverteilung 10 auf der Fahrbahn erzeugt, obwohl die Wahrscheinlichkeit für eine Kollision mit dem Verkehrsteilnehmer 9 der zweiten Wahrscheinlichkeitsklasse zugeordnet wurde.

Zusätzlich zu der Farbe der Lichtverteilung 10 kann ein in die Lichtverteilung 10 projiziertes Lichtzeichen 12 oder 13 dem Fahrer des Fahrzeugs 7 anzeigen, ob ein Fahrmanöver ausgeführt werden kann oder nicht. Dabei wird das Lichtzeichen 12 bzw. 13 in Abhängigkeit von der Wellenlänge der Lichtemission 15 bzw. der Farbe der Lichtverteilung 10 ausgewählt.

Bei einer roten Lichtverteilung 10 wird ein rotes Kreuz in die Lichtverteilung 10 projiziert, wie es in Figur 3 gezeigt ist. Das rote Kreuz 12 verbildlicht dem Fahrer des Fahrzeugs 7 zusätzlich, dass das geplante Fahrmanöver, nämlich der Abbiegevorgang nach rechts, nicht ausgeführt werden sollte.

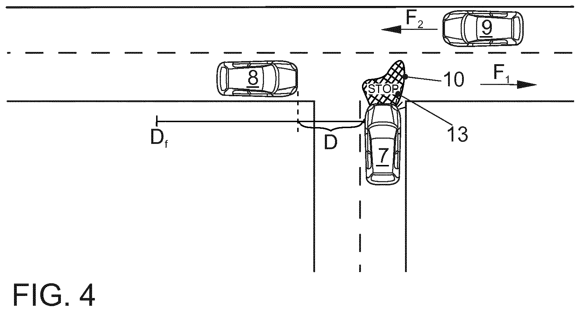

Alternativ kann auch ein Schriftzug 13 in die Lichtverteilung 10 projiziert werden, wie es in Figur 4 gezeigt ist. Dabei wird durch den Schriftzug 13 "STOP" sofort klar, dass der Fahrer das Fahrzeug 7 anhalten soll und das Fahrmanöver nicht ausführen soll. Alternativ kann der Schriftzug 13 auch das Wort "WARTEN" oder "ANHALTEN" formen.

Die Lichtzeichen 12 und 13 warnen den Fahrer des Fahrzeugs davor, dass geplante Fahrmanöver auszuführen.

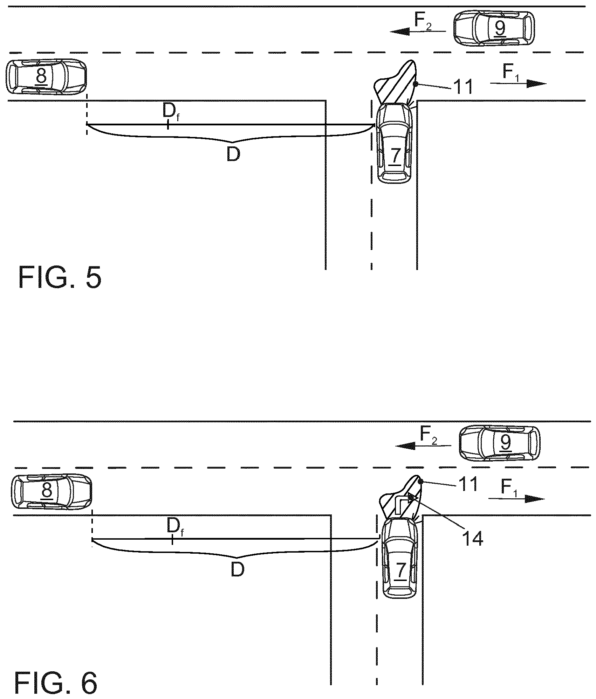

In Figur 5 überschreitet der Abstand D den festgelegten Wert D_{f}. Die Wahrscheinlichkeit für eine Kollision wird daher in die zweite Wahrscheinlichkeitsklasse eingeteilt. Das Scheinwerfersystem wird dann derart angesteuert, dass auf der Fahrbahn eine grüne Lichtverteilung 11 erzeugt wird. Dem Fahrer des Fahrzeugs 7 wird damit angezeigt, dass das Fahrmanöver noch ausgeführt werden kann, ohne dass es zu einer Kollision mit dem Fahrzeug 8 kommt.

Alternativ wird bei der zweiten Wahrscheinlichkeitsklasse eine orangefarbene oder gelbe Lichtverteilung auf der Fahrbahn erzeugt. Dies zeigt dem Fahrer an, dass das Fahrmanöver zwar ausgeführt werden kann, dies allerdings mit Risiken verbunden ist.

Wird kein anderer Verkehrsteilnehmer 8 oder 9 erfasst, wird die Wahrscheinlichkeit der ersten Wahrscheinlichkeitsklasse zugeordnet und ebenso eine grüne Lichtverteilung 11 auf der Fahrbahn erzeugt.

In Abhängigkeit von der Farbe Grün wird zusätzlich ein Lichtzeichen 14 in die grüne Lichtverteilung 11 projiziert. Das Lichtzeichen 14 ist dabei ein grüner Abbiegepfeil. Dem Fahrer wird dadurch die Anweisung gegeben, den Abbiegevorgang durchzuführen. Dies ist in Figur 6 gezeigt.

Wird für die zweite Wahrscheinlichkeitsklasse eine orangefarbene oder gelbe Lichtverteilung erzeugt, wird ein Lichtzeichen 12 oder 13, welches eine Warnung vor dem Ausführen des geplanten Fahrmanövers darstellt in die Lichtverteilung projiziert.

Alternativ kann bei einer orangefarbenen oder gelben Lichtverteilung auch das Lichtzeichen 14 in die Lichtverteilung projiziert werden. Um jedoch zu verdeutlichen, dass der Fahrer des Fahrzeugs 7 beim Ausführen des geplanten Abbiegevorgangs besonders vorsichtig sein soll, kann sich diese dynamisch verändern, also beispielsweise blinken.

Das erfindungsgemäße Verfahren ist insbesondere dazu ausgestaltet, den Fahrer bei einem bestimmten Fahrmanöver zu unterstützen. Dies entbindet den Fahrer jedoch nicht von der Pflicht, nochmal selbst zu prüfen, ob das Fahrmanöver auch bei grüner Lichtverteilung 11 tatsächlich ohne Gefahr ausgeführt werden kann.

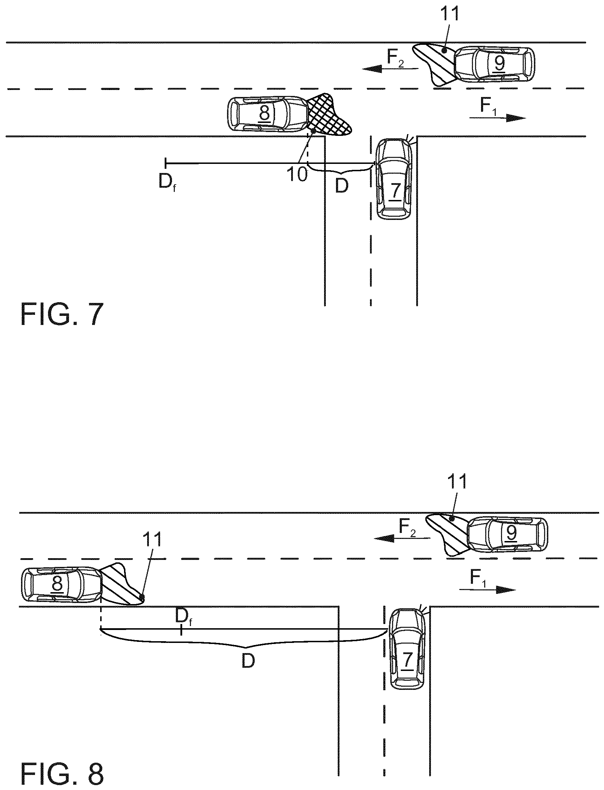

Mit Bezug zu den Figuren 7 und 8 wird ein weiteres Ausführungsbeispiel des erfindungsgemäßen Verfahrens erläutert.

Dabei sind die Fahrzeuge der Verkehrsteilnehmer 8 und 9 mit einem erfindungsgemäßen Fahrerassistenzsystem 6 ausgestattet.

Es wird dabei von beiden Fahrzeugen der Verkehrsteilnehmer 8 und 9 das Fahrzeug 7 erfasst. Zudem wird von beiden Fahrzeugen der Verkehrsteilnehmer 8 und 9 erfasst, dass das Fahrzeug 7 nach rechts abbiegen will, die zukünftige Bewegungsrichtung des Fahrzeugs 7 also die Bewegungsrichtung F₁ ist. Dies stellt für das Fahrzeug 9 keine Gefahr dar. Das Scheinwerfersystem 2 des Fahrzeugs 9 erzeugt daher eine grüne Lichtverteilung 11.

Von dem Fahrzeug 8 hingegen wird erkannt, dass das Fahrzeug 7 bei einem Abbiegen die Bewegungsrichtung F₁ des Verkehrsteilnehmers 8 schneidet. Es wird daher zunächst der Abstand D von dem Fahrzeug 7 ermittelt. In Fig. 7 unterschreitet der ermittelte Abstand einen festgelegten Wert D_{f} von 50 m. Das Fahrzeug 8 erzeugt daher eine rote Lichtverteilung. Dies gilt als Signal für den Fahrer des Fahrzeugs 7, den Abbiegevorgang erst fortzusetzen, wenn das Fahrzeug 8 vorbei gefahren ist.

In Figur 8 wird ermittelt, dass der Abstand D den festgelegten Wert D_{f} überschreitet. Die Lichtverteilung 11 des Fahrzeugs 8 ist daher grün. Dies zeigt dem Fahrer des Fahrzeugs 7 an, dass er den geplanten Abbiegevorgang noch durchführen kann.

In beiden Ausführungsbeispielen kann der festgelegte Wert D_{f} für den Abstand D als Funktion der Geschwindigkeit des Verkehrsteilnehmers 8 im Fahrerassistenzsystem hinterlegt sein. Dabei wird im ersten Ausführungsbeispiel die Geschwindigkeit des Verkehrsteilnehmers 8 von einem Sensor des Fahrzeugs 7 gemessen, während diese im zweiten Ausführungsbeispiel dem Fahrzeug des Verkehrsteilnehmers 8 ohnehin bekannt ist. Der festgelegte Wert ist dann umso kleiner je niedriger die erfasste Geschwindigkeit des Verkehrsteilnehmers 8 ist.

### Bezugszeichenliste

- 1: Laserprojektionseinheit
- 2: Scheinwerfersystem
- 3: Steuervorrichtung
- 4: Erfassungseinheit
- 5: Ermittlungseinheit
- 6: Fahrerassistenzsystem
- 7: Fahrzeug
- 8, 9: Verkehrsteilnehmer
- 10: Lichtverteilung
- 11: Lichtverteilung
- 12 bis 14: Lichtzeichen
- D: Abstand
- F₁: Bewegungsrichtung, zukünftige Bewegungsrichtung
- F₂: Bewegungsrichtung
- D_{f}: festgelegter Wert

## Patentansprüche

1. Verfahren zum Unterstützen eines Fahrers eines Fahrzeugs (7), bei dem
eine Ausgangslichtverteilung in einer weißen Farbe emittiert wird, die von einem Scheinwerfersystem zum Beleuchten des Umfelds vor dem Fahrzeug (7) erzeugt wird,
eine Wahrscheinlichkeit für eine Kollision mit einem anderen Verkehrsteilnehmer (8, 9) im Umfeld des Fahrzeugs (7) ermittelt wird, wobei die ermittelte Wahrscheinlichkeit einer Wahrscheinlichkeitsklasse zugeordnet wird, und
in Abhängigkeit von der Wahrscheinlichkeitsklasse von dem Fahrzeug (7) eine Lichtemission (15) emittiert wird, die eine Lichtverteilung (10, 11) mit einer Charakteristik auf einer Fahrbahn erzeugt, welche die Wahrscheinlichkeitsklasse wiedergibt, wobei
die Charakteristik der Lichtverteilung durch eine Wellenlänge der Lichtemission (15) erzeugt wird, so dass die Charakteristik der Lichtverteilung ihre Farbe ist,
die Wellenlänge der Ausgangslichtverteilung verändert wird, so dass die der Wahrscheinlichkeitsklasse zugehörige Farbe der Ausgangslichtverteilung erzeugt wird,
wenn kein anderer Verkehrsteilnehmer (8, 9) im Umfeld des Fahrzeugs (7) erfasst wird, die Wahrscheinlichkeit für eine Kollision einer ersten Wahrscheinlichkeitsklasse zugeordnet wird, und
die Lichtemission (15) eine erste Wellenlänge aufweist, mit der eine Lichtverteilung auf einer Fahrbahn mit einer ersten, von der weißen Ausgangslichtverteilung veränderten, Farbe erzeugt wird, wenn die Wahrscheinlichkeit für eine Kollision der ersten Wahrscheinlichkeitsklasse zugeordnet wurde,
wenn ein anderer Verkehrsteilnehmer (8, 9) im Umfeld des Fahrzeugs (7) erfasst wird, die Wahrscheinlichkeit für eine Kollision in Abhängigkeit von einem von dem anderen Verkehrsteilnehmer (8, 9) abhängigen veränderbaren Parameter einer zweiten und/oder dritten Wahrscheinlichkeitsklasse zugeordnet wird,
die Lichtemission (15) eine zweite Wellenlänge aufweist, mit der eine Lichtverteilung auf einer Fahrbahn mit einer zweiten Farbe erzeugt wird, wenn die Wahrscheinlichkeit für eine Kollision der zweiten Wahrscheinlichkeitsklasse zugeordnet wurde, und/oder
die Lichtemission (15) eine dritte Wellenlänge aufweist, mit der eine Lichtverteilung auf einer Fahrbahn mit einer dritten Farbe erzeugt wird, wenn die Wahrscheinlichkeit für eine Kollision der dritten Wahrscheinlichkeitsklasse zugeordnet wurde,
**dadurch gekennzeichnet, dass**
ein Lichtzeichen (12, 13, 14) in die Lichtverteilung (10, 11) projiziert wird, wobei das projizierte Lichtzeichen (12, 13, 14) abhängig von der Farbe der Lichtverteilung (10, 11) ist.

2. Verfahren nach Anspruch 1,
**dadurch gekennzeichnet, dass**
der Parameter einen Abstand (D) des erfassten Verkehrsteilnehmers (8, 9) von dem Fahrzeug (7) umfasst, wobei die Wahrscheinlichkeit für eine Kollision der zweiten Wahrscheinlichkeitsklasse zugeordnet wird, wenn der Abstand (D) größer als ein festgelegter Wert (D_{f}) ist, und/oder der dritten Wahrscheinlichkeitsklasse zugeordnet wird, wenn der Abstand (D) kleiner oder gleich dem festgelegten Wert (D_{f}) ist.

3. Verfahren nach Anspruch 1 oder 2,
**dadurch gekennzeichnet, dass**
der Parameter die Bewegungsrichtung (F₁, F₂) des erfassten Verkehrsteilnehmers (8, 9) umfasst, wobei ermittelt wird, ob eine prognostizierte Bewegungsrichtung (F₁) des erfassten Verkehrsteilnehmers (8, 9) die zukünftige Bewegungsrichtung (F₁) des Fahrzeugs (7) schneidet,
wenn ermittelt wird, dass die prognostizierte Bewegungsrichtung (F₂) des erfassten Verkehrsteilnehmers (8) die zukünftige Bewegungsrichtung (F₁) des Fahrzeugs (7) nicht schneidet, die Wahrscheinlichkeit der zweiten Wahrscheinlichkeitsklasse zugeordnet wird, und,
wenn ermittelt wird, dass die prognostizierte Bewegungsrichtung (F₁) des erfassten Verkehrsteilnehmers (8) die zukünftige Bewegungsrichtung (F₁) des Fahrzeugs (7) schneidet, die Wahrscheinlichkeit der dritten Wahrscheinlichkeitsklasse zugeordnet wird.

4. Verfahren nach einem der vorhergehenden Ansprüche,
**dadurch gekennzeichnet, dass**
die erste Farbe Grün, die zweite Farbe Gelb oder Orange und die dritte Farbe Rot ist.

5. Verfahren nach einem der vorhergehenden Ansprüche,
**dadurch gekennzeichnet, dass,**
wenn eine grüne Lichtverteilung (11) auf der Fahrbahn erzeugt wird, das Lichtzeichen (14) eine Anleitung zum Ausführen eines Fahrmanövers darstellt, und,
wenn eine orangefarbene, gelbe oder rote Lichtverteilung (10) auf der Fahrbahn erzeugt wird, das Lichtzeichen (12, 13) eine Warnung vor dem Ausführen des Fahrmanövers darstellt.

6. Fahrerassistenzsystem (6) zum Unterstützen eines Fahrers eines Fahrzeugs (7) mit
einer Erfassungseinheit (4), mittels welcher erfassbar ist, ob sich ein anderer Verkehrsteilnehmer (8, 9) im Umfeld des Fahrzeugs (7) befindet,
einer Ermittlungseinheit (5), mittels welcher eine Wahrscheinlichkeit für eine Kollision mit einem anderen Verkehrsteilnehmer (8, 9) im Umfeld des Fahrzeugs (7) ermittelbar ist und mittels welcher die ermittelte Wahrscheinlichkeit einer Wahrscheinlichkeitsklasse zuordenbar ist,
einem Scheinwerfersystem (2), welches eine Ausgangslichtverteilung in einer weißen Farbe zum Beleuchten des Umfelds vor dem Fahrzeug (7) erzeugt, und
einer Steuervorrichtung (3), mittels welcher das Scheinwerfersystem (2) in Abhängigkeit von der Wahrscheinlichkeitsklasse derart ansteuerbar ist, dass eine Lichtemission (15) emittierbar ist, die eine Lichtverteilung (10, 11) mit einer Charakteristik erzeugt, welche die Wahrscheinlichkeitsklasse wiedergibt, wobei
mittels des Scheinwerfersystems (2) in Abhängigkeit von der Wahrscheinlichkeitsklasse eine Lichtemission (15) einer Wellenlänge emittierbar ist, so dass die Charakteristik der erzeugten Lichtverteilung (10, 11) ihre Farbe umfasst,
die Wellenlänge der Ausgangslichtverteilung veränderbar ist, so dass die der Wahrscheinlichkeitsklasse zugehörige Farbe der Ausgangslichtverteilung erzeugbar ist,
mit der Ermittlungseinheit (5) die Wahrscheinlichkeit für eine Kollision einer ersten Wahrscheinlichkeitsklasse zuordenbar ist, wenn kein anderer Verkehrsteilnehmer (8, 9) im Umfeld des Fahrzeugs (7) erfasst wird, und
die Lichtemission (15) eine erste Wellenlänge aufweist, mit der eine Lichtverteilung auf einer Fahrbahn mit einer ersten, von der weißen Ausgangslichtverteilung veränderten, Farbe erzeugt wird, wenn die Wahrscheinlichkeit für eine Kollision der ersten Wahrscheinlichkeitsklasse zugeordnet wurde,
mit der Ermittlungseinheit (5) die Wahrscheinlichkeit für eine Kollision in Abhängigkeit von einem von dem anderen Verkehrsteilnehmer (8, 9) abhängigen veränderbaren Parameter (D, F₁, F₂) einer zweiten und/oder dritten Wahrscheinlichkeitsklasse zuordenbar ist, wenn ein anderer Verkehrsteilnehmer (8, 9) im Umfeld des Fahrzeugs (7) erfasst wird,
die Lichtemission (15) eine zweite Wellenlänge aufweist, mit der eine Lichtverteilung auf einer Fahrbahn mit einer zweiten Farbe erzeugt wird, wenn die Wahrscheinlichkeit für eine Kollision der zweiten Wahrscheinlichkeitsklasse zugeordnet wurde, und/oder
die Lichtemission (15) eine dritte Wellenlänge aufweist, mit der eine Lichtverteilung auf einer Fahrbahn mit einer dritten Farbe erzeugt wird, wenn die Wahrscheinlichkeit für eine Kollision der dritten Wahrscheinlichkeitsklasse zugeordnet wurde,
**dadurch gekennzeichnet, dass,**
ein Lichtzeichen (12, 13, 14) in die Lichtverteilung (10, 11) projizierbar ist, wobei das projizierte Lichtzeichen (12, 13, 14) abhängig von der Farbe der Lichtverteilung (10, 11) ist.

7. Fahrerassistenzsystem (6) nach Anspruch 6,
**dadurch gekennzeichnet, dass**
das Scheinwerfersystem (2) eine Laserprojektionseinheit (1) umfasst.

8. Fahrzeug (7) mit einem Fahrerassistenzsystem (6) nach einem der Ansprüche 6 oder 7.

## Claims

1. Method for assisting a driver of a vehicle (7), in which
an output light distribution is emitted in a white color, which is generated by means of a headlight system for illuminating the surroundings in front of the vehicle (7),
a probability of a collision with another road user (8, 9) in the surroundings of the vehicle (7) is determined, the determined probability being assigned to a probability class, and
depending on the probability class, a light emission (15) is emitted by the vehicle (7), which generates a light distribution (10, 11) on a roadway, which light distribution has a characteristic which reflects the probability class,
the characteristic of the light distribution being generated using a wavelength of the light emission (15), so that the characteristic of the light distribution is its color,
the wavelength of the output light distribution being changed, so that the color of the output light distribution corresponding to the probability class is generated,
if no other road user (8, 9) is detected in the surroundings of the vehicle (7), the probability of a collision being assigned to a first probability class, and
the light emission (15) having a first wavelength, with which a light distribution having a first color, which is changed from the white output light distribution, is generated on a roadway when the probability of a collision has been assigned to the first probability class,
if another road user (8, 9) is detected in the surroundings of the vehicle (7), the probability of a collision being assigned to a second and/or third probability class depending on a variable parameter dependent on the other road user (8, 9),
the light emission (15) having a second wavelength, with which a light distribution having a second color is generated on a roadway when the probability of a collision has been assigned to the second probability class, and/or
the light emission (15) having a third wavelength, with which a light distribution having a third color is generated on a roadway when the probability of a collision has been assigned to the third probability class,
**characterized in that**
a light signal (12, 13, 14) is projected into the light distribution (10, 11), the projected light signal (12, 13, 14) being dependent on the color of the light distribution (10, 11).

2. Method according to claim 1,
**characterized in that**
the parameter comprises a distance (D) of the detected road user (8, 9) from the vehicle (7), the probability of a collision being assigned to the second probability class if the distance (D) is greater than a specified value (Df) and/or being assigned to the third probability class if the distance (D) is less than or equal to the specified value (Df).

3. Method according to either claim 1 or claim 2,
**characterized in that**
the parameter comprises the direction of movement (F₁, F₂) of the detected road user (8, 9), it being determined whether a predicted direction of movement (F₁) of the detected road user (8, 9) intersects the future direction of movement (F₁) of the vehicle (7),
if it is determined that the predicted direction of movement (F₂) of the detected road user (8) does not intersect the future direction of movement (F₁) of the vehicle (7), the probability is assigned to the second probability class, and,
if it is determined that the predicted direction of movement (F₁) of the detected road user (8) intersects the future direction of movement (F₁) of the vehicle (7), the probability is assigned to the third probability class.

4. Method according to any of the preceding claims,
**characterized in that**
the first color is green, the second color is yellow or orange and the third color is red.

5. Method according to any of the preceding claims,
**characterized in that**
when a green light distribution (11) is generated on the roadway, the light signal (14) represents an instruction to carry out a driving maneuver, and,
when an orange, yellow or red light distribution (10) is generated on the roadway, the light signal (12, 13) depicts a warning before carrying out the driving maneuver.

6. Driver assistance system (6) for assisting a driver of a vehicle (7), having
a detection unit (4), by means of which it can be detected whether another road user (8, 9) is located in the surroundings of the vehicle (7),
a determination unit (5), by means of which a probability of a collision with another road user (8, 9) in the surroundings of the vehicle (7) can be determined and by means of which the determined probability can be assigned to a probability class,
a headlight system (2) which produces an output light distribution in a white color for illuminating the surroundings in front of the vehicle (7), and
a control device (3), by means of which the headlight system (2) can be controlled depending on the probability class such that a light emission (15) can be emitted which produces a light distribution (10, 11) having a characteristic which reflects the probability class,
a light emission (15) of a wavelength being emittable by means of the headlight system (2) depending on the probability class, so that the characteristic of the generated light distribution (10, 11) comprises its color,
the wavelength of the output light distribution being changeable, so that the color of the output light distribution corresponding to the probability class can be generated,
the probability of a collision can being assignable to a first probability class by means of the determination unit (5) if no other road user (8, 9) is detected in the surroundings of the vehicle (7), and
the light emission (15) having a first wavelength, with which a light distribution having a first color, which is changed from the white output light distribution, is generated on a roadway when the probability of a collision has been assigned to the first probability class,
the probability of a collision being assignable to a second and/or third probability class by the determination unit (5) depending on a variable parameter (D, F₁, F₂) dependent on the other road user (8, 9) if another road user (8, 9) is detected in the surroundings of the vehicle (7), the light emission (15) having a second wavelength with which a light distribution with a second color is generated on a roadway when the probability of a collision has been assigned to the second probability class, and/or
the light emission (15) having a third wavelength, with which a light distribution having a third color is generated on a roadway when the probability of a collision has been assigned to the third probability class,
**characterized in that**
a light signal (12, 13, 14) can be projected into the light distribution (10, 11), the projected light signal (12, 13, 14) being dependent on the color of the light distribution (10, 11).

7. Driver assistance system (6) according to claim 6,
**characterized in that**
the headlight system (2) comprises a laser projection unit (1).

8. Vehicle (7) having an driver assistance system (6) according to either claim 6 or claim 7.

## Revendications

1. Procédé pour l'assistance à un conducteur d'un véhicule (7), dans lequel
une répartition de lumière initiale est émise dans une couleur blanche produite par un système de phares pour l'éclairage de l'environnement à l'avant du véhicule (7),
une probabilité d'une collision avec un autre usager de la route (8, 9) dans l'environnement du véhicule (7) est déterminée, dans lequel la probabilité déterminée est associée à une classe de probabilité, et
en fonction de la classe de probabilité, une émission de lumière (15) est émise par le véhicule (7), qui produit une répartition de lumière (10, 11) ayant une caractéristique sur une voie de circulation qui reflète la classe de probabilité, dans lequel
la caractéristique de la répartition de lumière est produite par une longueur d'onde de l'émission de lumière (15), de sorte que la caractéristique de la répartition de lumière est sa couleur,
la longueur d'onde de la répartition de lumière initiale est modifiée de manière à produire la couleur de la répartition de lumière initiale associée à la classe de probabilité,
si aucun autre usager de la route (8, 9) n'est détecté dans l'environnement du véhicule (7), la probabilité d'une collision est attribuée à une première classe de probabilité, et
l'émission de lumière (15) présente une première longueur d'onde avec laquelle une répartition de lumière sur une voie de circulation est produite avec une première couleur modifiée par rapport à la répartition de lumière initiale blanche lorsque la probabilité d'une collision a été attribuée à la première classe de probabilité,
lorsqu'un autre usager de la route (8, 9) est détecté dans l'environnement du véhicule (7), la probabilité d'une collision est attribuée à une deuxième et/ou une troisième classe de probabilité en fonction d'un paramètre modifiable dépendant de l'autre usager de la route (8, 9),
l'émission de lumière (15) présente une deuxième longueur d'onde avec laquelle une répartition de lumière sur une voie de circulation est produite avec une deuxième couleur lorsque la probabilité d'une collision a été attribuée à la deuxième classe de probabilité, et/ou
l'émission de lumière (15) présente une troisième longueur d'onde avec laquelle une répartition de lumière sur une voie de circulation est produite avec une troisième couleur lorsque la probabilité d'une collision a été attribuée à la troisième classe de probabilité,
**caractérisé en ce**
**qu'**un signe lumineux (12, 13, 14) est projeté dans la répartition de lumière (10, 11), dans lequel le signe lumineux (12, 13, 14) projeté dépend de la couleur de la répartition de lumière (10, 11).

2. Procédé selon la revendication 1,
**caractérisé en ce que**
le paramètre comprend une distance (D) de l'usager de la route (8, 9) détecté par rapport au véhicule (7), dans lequel la probabilité d'une collision est attribuée à la deuxième classe de probabilité lorsque la distance (D) est supérieure à une valeur fixée (Df) et/ou est attribuée à la troisième classe de probabilité lorsque la distance (D) est inférieure ou égale à la valeur fixée (Df).

3. Procédé selon la revendication 1 ou 2,
**caractérisé en ce que**
le paramètre comprend la direction de déplacement (F₁, F₂) de l'usager de la route (8, 9) détecté, dans lequel il est déterminé si une direction de déplacement (F₁) pronostiquée de l'usager de la route (8, 9) détecté croise la direction de déplacement (F₁) future du véhicule (7),
lorsqu'il est déterminé que la direction de déplacement (F₂) pronostiquée de l'usager de la route (8) détecté ne coupe pas la direction de déplacement (F₁) future du véhicule (7), la probabilité est attribuée à la deuxième classe de probabilité, et,
lorsqu'il est déterminé que la direction de déplacement pronostiquée (F₁) de l'usager de la route (8) détecté croise la direction de déplacement (F₁) future du véhicule (7), la probabilité est attribuée à la troisième classe de probabilité.

4. Procédé selon l'une des revendications précédentes,
**caractérisé en ce que**
la première couleur est le vert, la deuxième couleur le jaune ou l'orange et la troisième couleur le rouge.

5. Procédé selon l'une des revendications précédentes,
**caractérisé en ce que,**
lorsqu'une répartition de lumière verte (11) est produite sur la voie de circulation, le signe lumineux (14) représente une instruction pour l'exécution d'une manoeuvre de conduite, et,
lorsqu'une répartition de lumière orange, jaune ou rouge (10) est produite sur la voie de circulation, le signe lumineux (12, 13) représente un avertissement avant l'exécution de la manoeuvre de conduite.

6. Système d'assistance au conducteur (6) pour l'assistance d'un conducteur d'un véhicule (7) comportant
une unité de détection (4), à l'aide de laquelle il est possible de détecter si un autre usager de la route (8, 9) se trouve dans l'environnement du véhicule (7),
une unité de détermination (5), à l'aide de laquelle une probabilité d'une collision avec un autre usager de la route (8, 9) dans l'environnement du véhicule (7) peut être déterminée et à l'aide de laquelle la probabilité déterminée peut être attribuée à une classe de probabilité,
un système de phares (2) qui produit une répartition de lumière initiale dans une couleur blanche pour l'éclairage de l'environnement à l'avant du véhicule (7), et
un dispositif de commande (3) à l'aide duquel le système de phares (2) peut être commandé en fonction de la classe de probabilité de telle sorte qu'une émission de lumière (15) peut être émise, laquelle produit une répartition de lumière (10, 11) avec une caractéristique qui reflète la classe de probabilité, dans lequel
une émission de lumière (15) d'une longueur d'onde peut être émise à l'aide du système de phares (2) en fonction de la classe de probabilité, de sorte que la caractéristique de la répartition de lumière (10, 11) produite comprend sa couleur,
la longueur d'onde de la répartition de lumière initiale est modifiable, de sorte que la couleur de la répartition de lumière initiale associée à la classe de probabilité peut être produite,
l'unité de détermination (5) permet d'attribuer la probabilité d'une collision à une première classe de probabilité lorsqu'aucun autre usager de la route (8, 9) n'est détecté dans l'environnement du véhicule (7), et
l'émission de lumière (15) présente une première longueur d'onde avec laquelle une répartition de lumière sur une voie de circulation est produite avec une première couleur modifiée par rapport à la répartition de lumière initiale blanche lorsque la probabilité d'une collision a été attribuée à la première classe de probabilité,
l'unité de détermination (5) permet d'attribuer la probabilité d'une collision à une deuxième et/ou une troisième classe de probabilité en fonction d'un paramètre modifiable (D, F1, F2) dépendant de l'autre usager de la route (8, 9), lorsqu'un autre usager de la route (8, 9) est détecté dans l'environnement du véhicule (7), l'émission de lumière (15) présente une deuxième longueur d'onde avec laquelle une répartition de lumière sur une voie de circulation est produite avec une deuxième couleur, lorsque la probabilité d'une collision a été attribuée à la deuxième classe de probabilité, et/ou
l'émission de lumière (15) présente une troisième longueur d'onde avec laquelle une répartition de lumière sur une voie de circulation est produite avec une troisième couleur lorsque la probabilité d'une collision a été attribuée à la troisième classe de probabilité,
**caractérisé en ce**
**qu'**un signe lumineux (12, 13, 14) peut être projeté dans la répartition de lumière (10, 11), dans lequel le signe lumineux (12, 13, 14) projeté dépend de la couleur de la répartition de lumière (10, 11).

7. Système d'assistance au conducteur (6) selon la revendication 6,
**caractérisé en ce que**
le système de phares (2) comprend une unité de projection laser (1).

8. Véhicule (7) comportant un système d'assistance au conducteur (6) selon l'une des revendications 6 ou 7.
